Europäisches Patentamt

(19) European Patent Office

Office européen des brevets

(11) Numéro de publication: **0 201 374**
**B1**

(12) **FASCICULE DE BREVET EUROPEEN**

(45) Date de publication du fascicule du brevet:
14.03.90

(51) Int. Cl.⁴: **F02K 9/84**, B64G 5/00

(21) Numéro de dépôt: **86400689.5**

(22) Date de dépôt: **28.03.86**

(54) **Système d'actionnement hydraulique d'un organe dans une fusée.**

(30) Priorité: **04.04.85 FR 8505144**

(43) Date de publication de la demande:
**17.12.86 Bulletin 86/46**

(45) Mention de la délivrance du brevet:
**14.03.90 Bulletin 90/11**

(84) Etats contractants désignés:
**BE CH DE GB IT LI LU NL**

(56) Documents cités:
**FR-A- 1 237 219**
**FR-A- 1 596 085**
**FR-A- 2 068 765**
**FR-A- 2 444 805**
**US-A- 3 049 877**
**US-A- 3 692 258**

(73) Titulaire: **CENTRE NATIONAL D'ETUDES SPATIALES, 2 Place Maurice-Quentin, F-75039 Paris Cedex 01(FR)**

(72) Inventeur: **Paris, François, Sarumby Route des Barthes, F-40220 Tarnos(FR)**
Inventeur: **Johnson, Claude, 10, Allée Lully, F-91240 Saint Michel sur Orge(FR)**
Inventeur: **Lecrivain, Albert, 14, rue des Epicéas, F-91220 Bretigny sur Orge(FR)**

(74) Mandataire: **Mongrédien, André et al, c/o BREVATOME 25, rue de Ponthieu, F-75008 Paris(FR)**

## Description

La présente invention a pour objet un système hydraulique d'actionnement d'un organe dans un ensemble dont le fonctionnement est autonome tout au moins pendant une durée limitée, par exemple un véhicule ou un aéronef et parmi ceux-ci en particulier une fusée. L'invention concerne donc les industries mécaniques et les véhicules.

Dans un tel ensemble autonome, il existe des organes ou accessoires qui doivent être actionnés par des moyens embarqués dans l'ensemble lui-même, pour être utilisés par exemple en vol. Ainsi, pour une fusée, c'est le cas de vérins qui orientent le ou les moteurs à réaction pour piloter l'ensemble.

L'énergie nécessaire à ces vérins est habituellement fournie par une pompe hydraulique à haute pression qui est entraînée par un moteur à gaz ou électrique, le tout formant un groupe embarqué dans la fusée.

Le document FR-A 2 068 765 décrit ainsi une tuyère pour moteur à réaction équipée de moyens hydrauliques aptes à la faire basculer.

Le document US-A 3 049 877 décrit lui aussi une tuyère pour moteur à réaction, actionnée par un vérin hydraulique.

Dans cet art antérieur, on utilise une source de fluide hydraulique comprenant un réservoir embarqué, un moyen de mise en pression du fluide, et une conduite amenant ce fluide sous pression à l'organe à commander.

Avant le fonctionnement autonome, de nombreux essais doivent être effectués. Dans l'art antérieur l'énergie nécessaire à la commande des divers organes à tester est délivrée par des sources d'énergie non embarquées, gaz sous pression ou courant électrique pour entraîner le groupe embarqué tout en évitant de mettre en œuvre les sources d'énergie embarquées, tant pour ne pas augmenter la masse embarquée que parce que ces sources embarquées peuvent n'être pas encore disponibles.

L'inconvénient de cette technique est que le groupe de pompage embarqué est cher, lourd et de fiabilité insuffisante.

La présente invention a pour but de remédier à cet inconvénient en proposant un système de haute fiabilité, de faible masse et de maintenance réduite.

Ce but est atteint, selon l'invention, grâce à une duplication de certains moyens d'alimentation en fluide hydraulique, duplication qui permet de faire des essais au sol puis d'alimenter de manière autonome et fiable l'organe en question, lorsque la fusée est en vol. Par ailleurs, le système est du type dit à fluide perdu.

De façon plus précise, la présente invention a pour objet un système d'actionnement d'un organe par fluide hydraulique dans une fusée comprenant:

a) une première source de fluide hydraulique avec:
— un réservoir embarqué à bord de la fusée,
— un moyen de mise en pression de ce fluide hydraulique,
— une conduite amenant ce fluide hydraulique sous pression à l'organe à actionner, ce système étant caractérisé par le fait qu'il comprend en outre:
b) une deuxième source de fluide hydraulique sous pression avec:
— une interface séparable dont une partie non embarquée reçoit le fluide hydraulique issu d'une source non embarquée, cette interface comprenant un moyen d'obturation,
— une conduite reliée à ladite interface et en communication d'une part avec la partie inférieure dudit réservoir et, d'autre part, avec l'organe à actionner,
— un moyen d'obturation disposé entre ladite interface et ledit réservoir pour permettre l'utilisation des deux sources indépendamment l'une de l'autre,
c) une conduite d'évacuation issue de l'organe à actionner pouvant évacuer hors de la fusée le fluide directement après qu'il a actionné l'organe.

Les caractéristiques de l'invention apparaîtront mieux à la lumière de la description qui va suivre se référant à des dessins annexés où:

la figure 1 représente un premier mode de réalisation utilisant un réservoir d'hélium sous pression et un échangeur de fluide,

la figure 2 illustre un deuxième mode de réalisation correspondant à une fusée à hydrogène liquide,

la figure 3 illustre un troisième mode de réalisation dans lequel le fluide hydraulique de commande est l'eau.

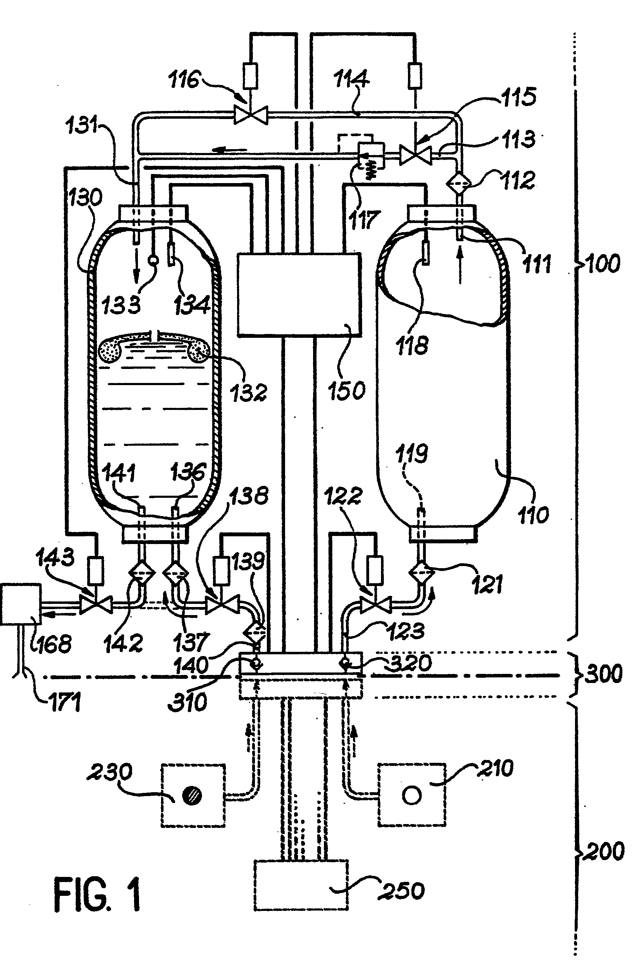

Le système représenté sur la figure 1 comprend des moyens 100 embarqués à bord de la fusée, des moyens 200 situés au sol et une interface bord-sol 300. Les moyens 100 embarqués comprennent une bouteille d'hélium sous pression 110 (sur la partie droite de la figure), un réservoir de fluide 130 (sur la partie gauche) et une électronique de contrôle 150 (au centre). La pression du réservoir 110 est par exemple de 60 MPa et celle du réservoir 130 de 30 MPa. L'hélium contenu dans la bouteille 110 est dirigé dans le réservoir 130 par un conduit 111 muni d'un filtre 112. On trouve ensuite deux conduits en parallèle 113 et 114 munis chacun d'électrovanne de régulation de pression 115 et 116. La première est en outre associée à un détendeur 117. La bouteille 110 est également équipée d'un capteur de pression 118.

Le réservoir de fluide 130 reçoit, à sa partie supérieure, l'hélium sous pression par un conduit d'arrivée 131, il comprend un diaphragme-flotteur 132, séparant l'hélium d'avec le fluide hydraulique pour éviter sa dissolution. Il est équipé d'un capteur de niveau de liquide 133 et d'un capteur de pression 134.

L'ensemble constitué par les électrovannes 115, 116, les capteurs de pression 118, 134 est relié à l'électronique de contrôle 150, qui effectue diverses comparaisons entre les grandeurs mesurées et des valeurs de référence et délivre, en conséquence, des ordres de commande d'ouverture ou de fermeture des vannes.

A la partie inférieure du système embarqué 100, on trouve côté bouteille 110 un conduit d'introduction d'hélium 119 dans la bouteille, ce conduit étant muni d'un filtre 121 relié à une électrovanne de gonflage 122 et à un conduit d'entrée 123. Côté réservoir de fluide, on trouve un conduit d'introduction de fluide 136 dans le réservoir, ce conduit étant relié à un filtre 137, une électrovanne 138, un filtre 139 et un conduit d'entrée de fluide hydraulique 140.

Le réservoir 130 comprend encore, à sa partie inférieure, un conduit de refoulement 141 muni d'un filtre 142 et d'une électrovanne de mise en oeuvre 143. Cette dernière vanne est reliée à l'organe à commander 168, schématisé sur cette figure 1.

L'interface bord-sol 300 comprend une jonction d'introduction de fluide hydraulique 310 (clapets auto-obturables ou manchons de type connu), qui permettent de relier le conduit d'entrée de fluide hydraulique 140 à une source de fluide hydraulique 230 située au sol. Dans l'exemple illustré, l'interface comprend encore une jonction d'entrée d'hélium 320 reliant le conduit 123 à une source d'hélium 210 sous pression élevée.

L'interface 300 comprend aussi diverses connexions électriques classiques permettant de relier l'organe de contrôle 150 et les vannes de gonflage 122 et de remplissage 138 à un circuit de commande 250 situé au sol.

Avec un tel systéme, lorsqu'on veut commander un organe de la fusée, alors que celle-ci est encore au sol, on introduit le fluide hydraulique (par exemple de l'huile) dans le réservoir 130 en ouvrant l'électrovanne 138. Le fluide sous pression est transmis à l'organe à commander par la vanne de mise en oeuvre 143, sa pression pouvant provenir soit de la source 230, soit de la bouteille 110 par l'intermédiaire de l'hélium comprimé. Après usage le fluide est évacué à l'air libre et sans pression par le conduit 171 issu de l'organe 168.

En vol, l'interface 300 est séparée (au décollage toutes les connexions sont arrachées et les liaisons sont interrompues). La commande de l'organe s'effectue toujours par le même fluide hydraulique mais, cette fois, grâce à la pression d'hélium introduite dans le réservoir de fluide 130. Le fluide de commande est transmis à l'organe à travers la même vanne 143 qui a servi aux essais au sol.

On observera accessoirement que le fluide hydraulique introduit à la partie inférieure du réservoir 130, lors d'une commande au sol, se trouve dégazé par son passage à travers ce réservoir. C'est la raison pour laquelle on préfère cette disposition à celle qui consisterait à relier directement l'électrovanne 138 à l'électrovanne 143 sans passer par le réservoir 130, disposition qui est néanmoins possible (en tireté sur la figure 1).

Le système qui vient d'être décrit est très fiable (tant du fait du très faible nombre d'organes actifs que du fait des redondances présentes dans le système de transfert d'hélium vers l'échangeur). Par ailleurs, des éléments permettant la commande des organes au sol n'ajoutent que très peu de poids au système embarqué, puisqu'il s'agit seulement d'une jonction 310, d'une vanne 138 et d'un conduit d'introduction 136.

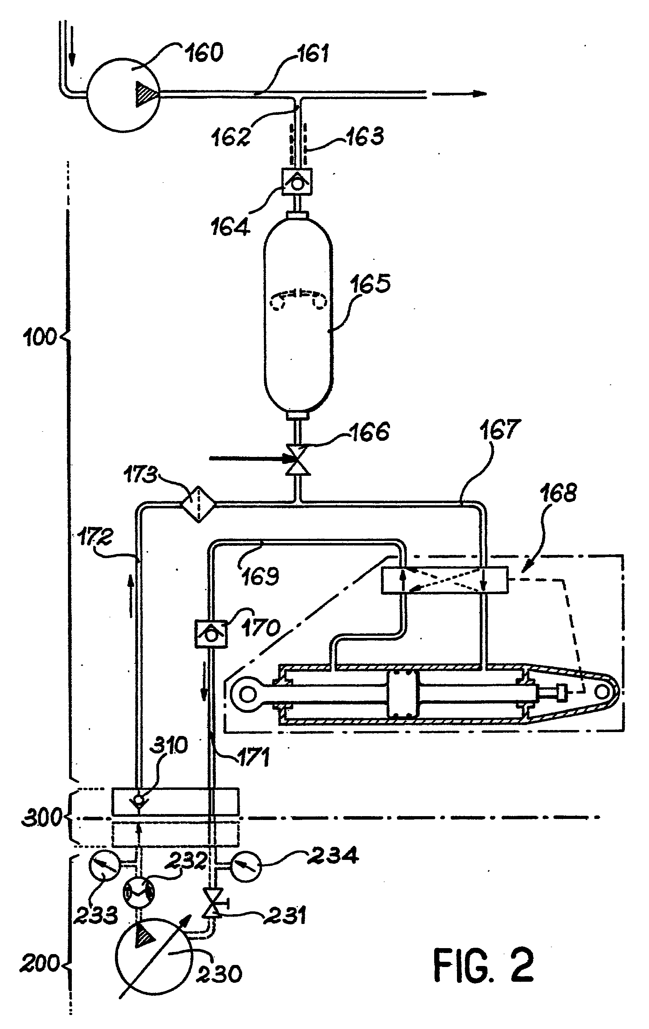

La figure 2 illustre un mode de réalisation plus simple dans lequel les moteurs de la fusée sont supposés être alimentés par de l'hydrogène liquide. On retrouve encore des moyens embarqués 100, des moyens au sol 200 et une interface bord-sol 300. La fusée comprend, à bord, une pompe 160 reliée, d'une part, à un réservoir d'hydrogène liquide non représenté et, d'autre part, à un conduit de refoulement d'hydrogène 161, lequel est relié à un moteur de la fusée (non représenté). Le système comporte une dérivation 162 qui est piquée sur le conduit 161 et est munie d'un moyen 163 pour réchauffer le fluide dérivé et le vaporiser. Le conduit 162 comporte une vanne anti-retour 164 et débouche dans un réservoir de fluide 165 (du type du réservoir 130 illustré sur la figure 1). A la sortie de ce réservoir se trouve une vanne de mise en oeuvre 166 à commande électrique ou pneumatique. Cette dernière est reliée, par un conduit 167, à l'organe à commander 168 qui est, dans l'exemple illustré, constitué par une servovalve reliée à un vérin. La servovalve est reliée à un conduit d'évacuation 169 muni d'un clapet antiretour 170 et d'une évacuation 171 hors de la fusée.

Le système comprend encore, dans l'interface bord-sol 300, une jonction 310 reliée à une source de fluide sous pression 230 située au sol. La jonction 310 communique avec un conduit 172 d'un filtre 173 relié au conduit 167 en aval de la vanne 166.

Pour les essais au sol, le fluide hydraulique est introduit par la jonction 310 jusqu'à l'organe 168 par les conduits 172 et 167, la vanne 166 étant fermée. Ce fluide est identique au fluide utilisé en vol, délivré par le réservoir échangeur de pression 165.

Le fluide hydraulique est évacué après usage à travers le conduit 171. Au sol l'effluent est renvoyé à la source 230, qui est une centrale hydraulique classique.

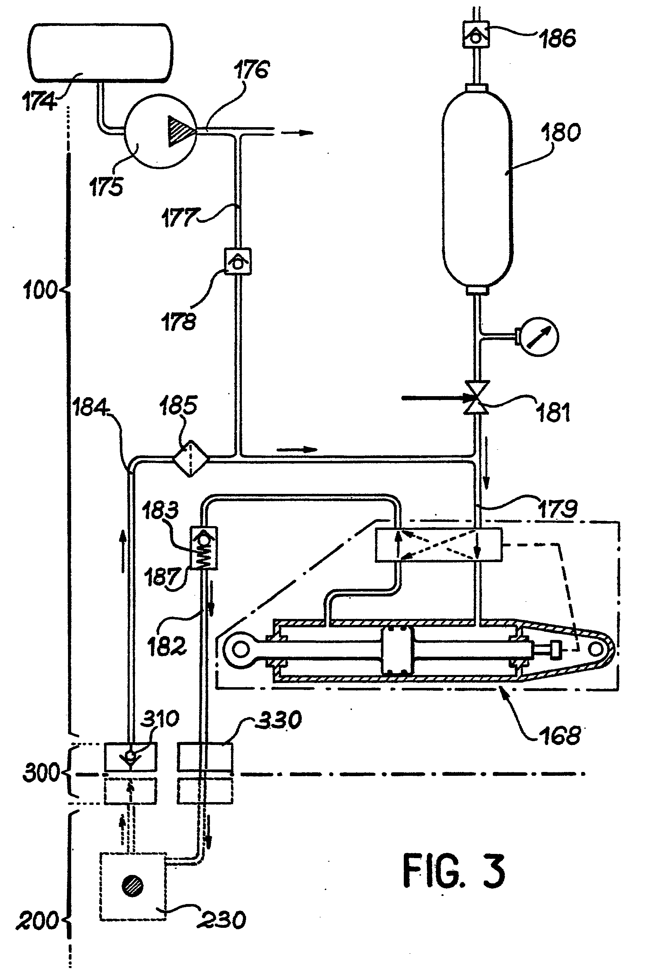

La figure 3 correspond à une fusée équipée d'une pompe à eau 175 alimentée par un réservoir 174 et refoulant l'eau sous forte pression dans un conduit 176, par exemple pour refroidir des gaz de combustion qui actionnent une turbine entraînant la pompe 175 entre autres. Selon l'invention, une dérivation 177 du conduit 176, munie d'un clapet antiretour 178, est reliée au conduit d'introduction 179 du fluide moteur sous pression dans l'organe 168 qui est encore du type servovalve et vérin. A titre facultatif les moyens embarqués peuvent comprendre en outre un petit accumulateur d'eau 180, sous pression de gaz introduit par le clapet 186, qui peut actionner transitoirement l'organe avant mise en route de la pompe, et qui, étant placé en position haute, peut servir de dégazeur. En effet, la mise en route de la pompe 175 peut s'accompagner d'un certain entraînement de bulles.

Après usage dans l'organe 168 l'eau à basse pression est évacuée l'atmosphère par la vanne 181 et le conduit 182, à travers un clapet antiretour 187 appuyé par un faible ressort 183 pour éviter une vidange de l'organe 168 par un écoulement libre.

Les moyens permettant les essais au sol comprennent une jonction antiretour 310 reliée à une source 230 de fluide sous pression alimentant l'organe 168 par un conduit 184, un filtre 185 et le conduit 179.

Au sol le fluide évacué par le conduit 182 est ramené à la source 230 par l'interface séparable 330.

La présence d'une installation non embarquée 230, comme dans les exemples des figures 1, 2 et 3 permet d'y disposer le maximum des instruments de mesure et de contrôle nécessaire, allégeant et simplifiant d'autant l'ensemble autonome.

Dans les cas des figures 2 et 3 en particulier, cet ensemble peut n'emporter aucun instrument, vanne ou filtre autre que ceux figurés, les vannes de remplissage, manomètres et débit-mètres faisant partie de la source 230.

Ainsi la mise en oeuvre du mode de réalisation décrit au regard de la figure 2 peut comporter :
- la réalisation par le fabricant d'une livraison indissociable, étanche et purgée d'air, constituée du système d'actionnement et de l'organe 168 actionné,
- le transport et montage du tout sur l'ensemble autonome,
- la jonction avec les moyens non embarqués 200 au moyen de l'interface 300, la vanne 231 de retour au groupe de pompage 230 étant fermée et la vanne 166 ouverte,
- le remplissage en fluide hydraulique au moyen du groupe de pompage non embarqué 230,
- le contrôle du volume de ce fluide dans le réservoir 165 au moyen du compteur-totalisateur 232 non embarqué,
- un contrôle supplémentaire de ce volume par le manomètre non embarqué 233 qui donne, par communication directe avec le conduit 172, la pression du réservoir 165. Celle-ci dépend de ce volume et de la pression du gaz de purge au moment de la jonction de l'interface 300, pression de gaz donnée par le manomètre 234 non embarqué et piqué sur le retour au groupe de pompage en amont de la vanne 231.

Cette vanne 231 permet par ailleurs la vidange d'huile en cas d'essais sans fonctionnement autonome de l'ensemble.

## Revendications

1. Système d'actionnement d'un organe (168) par fluide hydraulique dans une fusée comprenant:
  a) une première source de fluide hydraulique avec:
    – un réservoir (130, 165, 174, 180) embarqué à bord de la fusée,
    – un moyen (131, 230, 175) de mise en pression de ce fluide hydraulique,
    – une conduite (141, 167, 177) amenant ce fluide hydraulique sous pression à l'organe à actionner (168),
  ce système étant caractérisé par le fait qu'il comprend en outre:
  b) une deuxième source de fluide hydraulique sous pression (140, 172, 184), avec:
    – une interface séparable (300) dont une partie non embarquée reçoit le fluide hydraulique issu d'une source (230) non embarquée, cette interface comprenant un moyen d'obturation (310),
    – une conduite (136, 172, 184, 177) reliée à ladite interface (300) et en communication d'une part avec la partie inférieure dudit réservoir et, d'autre part, avec l'organe à actionner (168),
    – un moyen d'obturation (138, 166, 178, 181) disposé entre ladite interface et ledit réservoir pour permettre l'utilisation des deux sources indépendamment l'une de l'autre,
  c) une conduite d'évacuation (171, 182, 193) issue de l'organe à actionner (168) pouvant évacuer hors de la fusée le fluide directement après qu'il a actionné l'organe.

2. Système selon la revendication 1, caractérisé par le fait que le tube (136) est relié au conduit (141) d'introduction hydraulique par l'intermédiaire du réservoir (130).

3. Système selon la revendication 1, caractérisé par le fait que le conduit d'évacuation (171) est relié par l'interface séparable (300) à un élément non embarqué recevant le fluide hydraulique après qu'il a actionné l'organe.

4. Système selon la revendication 1, caractérisé par le fait que le conduit d'évacuation comporte un élément anti-retour (170, 187).

5. Système selon la revendication 1, caractérisé par le fait que le conduit d'évacuation comporte un élément (183) occasionnant une perte de pression.

6. Système selon la revendication 1, caractérisé par le fait que le moyen d'une mise en pression comporte une pompe hydraulique (175).

7. Système selon la revendication 6, caractérisé par le fait qu'il comprend un accumulateur (180) entre la pompe et le conduit d'introduction (179).

8. Système selon la revendication 6, caractérisé par le fait qu'il comprend un anti-retour (164, 178) entre la pompe et le conduit d'introduction (167, 179).

9. Système selon la revendication 1, caractérisé par le fait que le moyen de mise en pression est un gaz sous pression introduit dans le réservoir (130) par un conduit de gaz (113, 114, 162).

10. Système selon la revendication 9, caractérisé par le fait que le conduit de gaz (113) comporte un détendeur (117).

11. Système selon la revendication 9, caractérisé par le fait que le conduit de gaz (113, 114) comporte une vanne (115, 116) commandée par un organe de contrôle (150).

12. Système selon la revendication 9, caractérisé par le fait que le gaz est issu d'une bouteille (110).

13. Système selon la revendication 12, caractérisé par le fait que la bouteille (110) reçoit par un tube (123) et une interface séparable (300) un gaz sous pression issu d'une source non embarquée (210).

14. Système selon la revendication 9, caractérisé par le fait que le réservoir comporte une paroi mobile (132) de séparation entre gaz et fluide hydraulique.

15. Système selon la revendication 9, caractérisé par le fait que le gaz sous pression est issu d'un réchauffeur (163) vaporisant un liquide sous pression.

## Claims

1. System for actuating a member (168) by hydraulic fluid in a rocket comprising:
  a) a first hydraulic fluid source with:
    - a tank (130, 165, 174, 180) onboard the rocket,
    - a means (131, 230, 175) for pressurizing said hydraulic fluid,

- a pipe (141, 167, 177) supplying said pressurized hydraulic fluid to the member to be actuated (168),

said system being characterized in that it also comprises:

b) a second pressurized hydraulic fluid source (140, 172, 184) with:

- a separable interface (300), whereof an offboard part receives the hydraulic fluid from an offboard source (230), said interface comprising a sealing means (310),

- a pipe (136, 172, 184, 177) connected to said interface (300) and linked on the one hand with the lower part of said tank and on the other with the member to be actuated (168),

- a sealing means (138, 166, 178, 181) located between said interface and said tank to permit the use of the two sources independently of one another,

c) a discharge pipe (171, 182, 193) from the member (168) to be actuated and able to discharge outside the rocket the fluid directly after it has actuated the member.

2. System according to claim 1, characterized in that the tube (136) is connected to the hydraulic introduction pipe (141) via tank (130).

3. System according to claim 1, characterized in that the discharge pipe (171) is connected by the separable interface (300) to an offboard element receiving the hydraulic fluid after it has actuated the member.

4. System according to claim 1, characterized in that the discharge pipe has a non-return element (170, 187).

5. System according to claim 1, characterized in that the discharge pipe has an element (183) leading to a pressure loss.

6. System according to claim 1, characterized in that the pressurizing means has a hydraulic pump (175).

7. System according to claim 6, characterized in that it comprises an accumulator (180) between the pump and the introduction pipe (179).

8. System according to claim 6, characterized in that it comprises a non-return means (164, 178) between the pump and the introduction pipe (167, 179).

9. System according to claim 1, characterized in that the pressurizing means is a pressurized gas introduced into the tank (130) by a gas pipe (113, 114, 162).

10. System according to claim 9, characterized in that the gas pipe (113) has a pressure reducing valve (117).

11. System according to claim 9, characterized in that the gas pipe (113, 114) has a valve (115, 116) controlled by a checking member (150).

12. System according to claim 9, characterized in that the gas comes from a cylinder (110).

13. System according to claim 12, characterized in that the cylinder (110) receives a pressurized gas from an offboard source (210) by a tube (123) and a separable interface (300).

14. System according to claim 9, characterized in that the tank has a mobile separating wall (132) between the gas and the hydraulic fluid.

15. System according to claim 9, characterized in that the pressurized gas comes from a reheater (163) vaporizing a pressurized liquid.

## Patentansprüche

1. Antriebssystem für ein Teil (168) in einer Rakete mittels einer hydraulischen Flüssigkeit mit:

a) einer ersten Quelle hydraulischer Flüssigkeit mit:

– einem Reservoir (130, 165, 174, 180), das sich an Bord der Rakete befindet,

– einer Vorrichtung (131, 230, 175), um diese hydraulische Flüssigkeit unter Druck zu setzen,

– einer Verbindungsleitung (141, 167, 177), die die unter Druck stehende hydraulische Flüssigkeit an das anzutreibende Teil (168) führt,

wobei dieses System gekennzeichnet ist durch die Tatsache, daß es außerdem aufweist:

b) eine zweite Quelle unter Druck stehender hydraulischer Flüssigkeit (140, 172, 184) mit:

– einer abtrennbaren Grenzfläche (300), von der ein nicht an Bord befindlicher Teil die hydraulische Flüssigkeit von einer nicht verladenen Quelle (230) empfängt, wobei diese Grenzfläche eine Verschlußvorrichtung (310) aufweist,

– einer Verbindungsleitung (136, 172, 184, 177), die mit der Grenzfläche (300) verbunden ist und eines Teils mit dem unteren Teil des Reservoirs, anderen Teils mit dem anzutreibenden Teil (168) in Verbindung steht,

– einer Verschlußvorrichtung (138, 166, 178, 181) angeordnet zwischen der Grenzfläche und dem Reservoir, um die Verwendung der beiden Quellen unabhängig voneinander zu ermöglichen,

c) eine Evakuierungsleitung (171, 182, 193), die aus dem anzutreibenden Teil (168) hervorkommt und die in der Lage ist, die Flüssigkeit aus der Rakete zu befördern, nachdem sie das Teil angetrieben hat.

2. System nach Anspruch 1, gekennzeichnet durch die Tatsache, daß die Röhre (136) mit der hydraulischen Einführleitung (141) über das Reservoir (130) verbunden ist.

3. System nach Anspruch 1, gekennzeichnet durch die Tatsache, daß die Evakuierungsleitung (171) über eine abtrennbare Grenzfläche (300) mit einem nicht an Bord befindlichen Element, das die hydraulische Flüssigkeit aufnimmt, nachdem es das Teil angetrieben hat, verbunden ist.

4. System nach Anspruch 1, gekennzeichnet durch die Tatsache, daß die Evakuierungsleitung ein Rückschlagventil (170, 187) aufweist.

5. System nach Anspruch 1, gekennzeichnet durch die Tatsache, daß die Evakuierungsleitung ein Element (183) aufweist, das einen Druckverlust verursacht.

6. System nach Anspruch 1, gekennzeichnet durch die Tatsache, daß die Vorrichtung zum Unterdrucksetzen eine hydraulische Pumpe (175) aufweist.

7. System nach Anspruch 1 bis 6, gekennzeichnet durch die Tatsache, daß es einen Speicher (180) zwischen der Pumpe und der Einführungsleitung (179) aufweist.

8. System nach Anspruch 1 bis 6, gekennzeichnet durch die Tatsache, daß es ein Rückschlagventil (164, 178) zwischen der Pumpe und der Einführleitung (167, 179) aufweist.

9. System nach Anspruch 1, gekennzeichnet durch die Tatsache, daß die Vorrichtung zum Unterdrucksetzen ein unter Druck stehendes Gas ist, das über eine Gasleitung (113, 114, 162) in das Reservoir (130) eingeführt wurde.

10. System nach Anspruch 1 bis 9, gekennzeichnet durch die Tatsache, daß die Gasleitung (113) einen Druckminderer (117) aufweist.

11. System nach Anspruch 1 bis 9, gekennzeichnet durch die Tatsache, daß die Gasleitung (113, 114) ein von einem Kontrollelement (150) überwachtes Ventil (115, 116) aufweist.

12. System nach Anspruch 1 bis 9, gekennzeichnet durch die Tatsache, daß das Gas aus einer Flasche (110) stammt.

13. System nach Anspruch 1 bis 12, gekennzeichnet durch die Tatsache, daß die Flasche (110) über ein Rohr (123) und eine abtrennbare Grenzfläche (300) ein unter Druck stehendes Gas aus einer nicht an Bord befindlichen Quelle (210) erhält.

14. System nach Anspruch 1 bis 9, gekennzeichnet durch die Tatsache, daß das Reservoir eine bewegliche Trennwand (132) zwischen dem Gas und der Hydraulikflüssigkeit aufweist.

15. System nach Anspruch 1 bis 9, gekennzeichnet durch die Tatsache, daß das unter Druck stehende Gas aus einem Erhitzer (163) stammt, der eine unter Druck stehende Flüssigkeit verdampft.

FIG. 1

FIG. 2

FIG. 3